(19) Europäisches Patentamt
European Patent Office
Office européen des brevets

(11) Publication number: 0 060 090
A1

# (12) EUROPEAN PATENT APPLICATION

(21) Application number: 82301095.4

(22) Date of filing: 04.03.82

(51) Int. Cl.[3]: C 08 F 210/16
C 08 F 4/64, C 08 F 4/02

(30) Priority: 06.03.81 IT 2020381

(43) Date of publication of application:
15.09.82 Bulletin 82/37

(84) Designated Contracting States:
BE DE FR GB NL

(71) Applicant: Montedison S.p.A.
31, Foro Buonaparte
I-20121 Milan(IT)

(72) Inventor: Milani, Federico
247,C1, Via Eridania
S. Maria Maddalena Rovigo(IT)

(72) Inventor: Corbelli, Luigi
42, Corso Vittorio Veneto
Ferrara(IT)

(72) Inventor: Fabbri, Roberto
2/a, Via delle Venezie
Tresigallo Ferrara(IT)

(74) Representative: Whalley, Kevin et al,
Marks & Clerk 57/60 Lincoln's Inn Fields
London WC2A 3LS(GB)

## (54) Process for the preparation of ethylene/propylene copolymers.

(57) A process for the copolymerization of ethylene with propylene with a catalyst obtained by the reaction of:

(a) a metalorganic aluminium compound selected from Al-trialkyls and Al-alkyl monohalides, and

(b) a titanium halide supported on an anhydrous magnesium dichloride or magnesium dibromide in activated form, and the X-ray spectrum of which is characterized in that the line of maximum intensity appearing in the spectrum of the Mg-dihalide of normal type is not present and that in its place there is a halo with its maximum intensity displaced with respect to the line.

More particularly, there may be obtained elastomeric copolymers containing 40 - 60% by weight of ethylene, free of crystallinity of the polypropylenic type and with a crystallinity of the polyethylenic type below 10%.

EP 0 060 090 A1

# "PROCESS FOR THE PREPARATION OF ETHYLENE/PROPYLENE COPOLYMERS"

The present invention relates to a process for the preparation of ethylene/propylene copolymers, and more particularly to a process for the preparation of saturated elastomeric and vulcanizable copolymers of ethylene with propylene.

U.S. Patent No. 4 013 823 describes the preparation of elastomeric ethylene/propylene copolymers by copolymerization of the monomers in the presence of a catalyst consisting of a mixture of an Al-alkyl with a titanium halide, the latter being supported on an anhydrous magnesium halide complexed with a Lewis base (an electron donor). By such a process there are obtained copolymers with hourly yields varying from about 30,000 to 500,000 g/g of titanium used as a catalyst.

British Patent No. 1 492 864 describes the preparation of thermoplastic ethylene/propylene copolymers having pronounced elastomeric characteristics in the non-vulcanized state, by copolymerizing propylene with 10 - 50% by weight of ethylene, in the presence of a catalyst formed by a mixture of an Al-alkyl, complexed with a specific amount of a Lewis base, with a titanium halide, likewise complexed with a Lewis base and supported by an activated anhydrous magnesium halide. By means of such a catalyst there may be obtained copolymers having a high crystallinity of the polypropylenic and/or ethylenic type, with hourly yields varying

from 8,000 to 80,000 g of copolymer per gram of metal titanium.

Moreover, Belbian Patent No. 848 527 describes catalysts suitable for the homo- and copolymerization of ∝-olefines either with each other or with ethylene, and consisting of a mixture of (i) an Al-alkyl complexed with a Lewis base and (ii) the reaction product (titanization) of a magnesium halide complexed with a Lewis base with a tetravalent titanium halide. The copolymers thus obtained, at least for propylene contents of from 40 to 60% by weight, have a crystallinity of both the polyethylenic as well as the polypropylenic type; the hourly yields at which such copolymers are generally obtained are about 100,000 g/g of titanium halide.

It has now been found by the applicants that there may be obtained ethylene/propylene copolymers free of crystallinity of the polypropylenic type and with a crystallinity of the polyethylenic type lower than 10%, with exceptionally high yields, of the order of 1-2 million grams of polymer per gram of titanium per hour, by a process which comprises polymerizing an ethylene/propylene mixture with a catalyst obtained by the reaction of :

(a) a metalorganic aluminium compound selected from one or more Al-trialkyls and Al-alkyl monohalides, and

(b) a titanium halide, in particular a titanium tetrahalide, supported on an anhydrous magnesium dichloride or magnesium dibromide in activated form, wherein the X-ray spectrum of the magnesium dichloride or magnesium

dibromide is characterized in that the line of maximum intensity appearing in the spectrum of the normal type magnesium dihalide, as defined by ASTM 3-0854 and ASTM 15-836, is not present and that in its place there is a halo with its maximum intensity displaced with respect to that line.

In the case of $MgCl_2$, the maximum intensity of the halo is displaced by a distance d comprised from d = 2.44 to d = 2.97 Å. In the case of $MgBr_2$, the maximum intensity of the halo is displaced by a distance d comprised from d = 2.80 to d = 3.24 Å.

In general the composition of the component (b) may be expressed as 70 - 90% by weight of Mg-dichloride or Mg--dibromide, the balance being represented by the Ti-compound.

The component (b) may be prepared according to a variety of methods. One of these comprises bringing the Ti-compound into contact with the pre-activated Mg-halide having the X-ray spectrum characteristics previously specified.

A further method of preparing the component (b) which is also the preferred method, comprises grinding a mixture of Mg-halide with the Ti-compound, operating under conditions (grinding time, type of mill) at which in the X-ray spectrum of the ground product there appears the change or modification of the above indicated spectrum.

Still another method of preparing the component (b) comprises reacting an adduct between the Mg-halide and an alcohol, and then treating the reaction product with an

excess of $TiCl_4$, at a temperature from 60°C to the boiling temperature of $TiCl_4$.

The Al-alkyl compound is used in such a case in a ratio to the adduct at least sufficient to react with the alcohol present.

The metalorganic compounds of Al, usable as component (a), preferably consist of Al-trialkyl compounds such as Al-triethyl, Al-tripropyl and Al-triisobutyl compounds or compounds of the formula

$Al-(CH_2-\underset{CH_3}{\underset{|}{CH}}-(CH_2)_2-CH_3)_3$, $Al-(CH_2-\underset{C_2H_5}{\underset{|}{CH}}-(CH_2)_2-CH_3)_3$, and

$Al\ (C_{12}H_{25})_3$.

The copolymerization of the ethylene with propylene utilizing the previously defined catalyst may be conducted in a liquid phase, in the presence of for example hexane, heptane or cyclohexane, or in a gaseous phase in the presence of a mixture of the components (a) and (b) of the catalyst.

In the mixture of the components (a) and (b) of the catalyst the relationship or ratio between the components is not critical; preferably, however, the components (a) and (b) are employed in weight ratios of from 200:1 to 3000:1.

The polymerization temperature is generally maintained at 0°C to 150°C, preferably at 0° to 50°C. The operational pressure may be atmospheric pressure or a pressure greater than atmospheric pressure.

The ethylene and the propylene are preferably polymerized with each other in such ratios as to obtain copolyme

containing from 40% to 60% by weight of copolymerized ethylene.

The invention will be further described with reference to the following illustrative Examples.

EXAMPLES 1 - 8 :

Into a 20 litre autoclave, maintained at the reaction temperature indicated in the following table, there were continuously introduced, in the given order, propylene and a mixture of Al-triisobutyl with Al-n.butyl as component (a) of the catalyst in an amount of 0.5 g/lt of total fresh monomers fed into the reactor.

The pressure was thereupon brought up to 12.5 atm. with ethylene, and component (b) of the catalyst, dispersed in a paraffinic hydrocarbon, was then added and the feeding of the monomers and catalytic components (a) and (b) was carried out at the previously indicated temperature.

In some instances $Zn(C_2H_5)_2$ was added to the monomers fed in as a molecular weight regulator.

The catalytic component (b) was prepared by grinding 60 g of anhydrous $MgCl_2$ together with 4 g of $TiCl_4$ for 90 hours in a vibrating mill of the VIBRATOM type produced by M. V. Gravenhage of Holland, having a total volume of one litre, and containing 3 kg of stainless steel balls of 16 mm diameter.

The grinding was carried out assuming a filling coefficient equal to 135 g/lt of total (empty) volume, at a temperature inside the grinder of about 40°C, with grinding

times differing from test to test of 25 to 150 hours.

The loading of the mill with the products to be ground, the subsequent grinding, and the discharge from the mill of the co-ground product were carried out under a nitrogen atmosphere.

In the following table, there are given the characteristics of the copolymers obtained, the vulcanization conditions and the properties of the vulcanized copolymers, and the polymerization conditions.

| | EXAMPLES | | | | | | | |
|---|---|---|---|---|---|---|---|---|
| | 1 | 2 | 3 | 4 | 5 | 6 | 7 | 8 |
| Fed in propylene (Kg/hr) | 6 | 5.78 | 5.854 | 5.965 | 5.854 | 6.72 | 6.555 | 6.44 |
| Fed in ethylene (Kg/hr) | 0.965 | 1.144 | 1.154 | 1.042 | 1.158 | 0.656 | 0.678 | 0.731 |
| Molar ratio Al/Ti | 2300 | 1300 | 1300 | 1900 | 1300 | 932 | 1300 | 950 |
| Component(b) fed in (g/hr) | 0.049 | 0.087 | 0.087 | 0.058 | 0.087 | 0.120 | 0.088 | 0.120 |
| $Zn(C_2H_5)_2$ fed in (g/hr) | - | - | - | 0.751 | 0.87 | 0.671 | - | - |
| Temperature (°C) | 27 | 22 | 22 | 22 | 22 | 24 | 26 | 25 |
| Dwell time in reactor of the catalyst and the reaction slurry (minutes) | 57 | 58 | 57 | 57 | 57 | 60 | 60 | 60 |
| CHARACTERISTICS OF THE POLYMER | | | | | | | | |
| Bound propylene (% by weight) | 60 | 46 | 44 | 43 | 45 | 50 | 57 | 52 |
| Mooney viscosity(1+4) at 121°C | 22 | 34 | 42 | 28 | 31 | 31 | 44 | 60 |
| [η] in tetraline at 125°C | 2.38 | 2.65 | 2.77 | 2.45 | 2.29 | 2.69 | 3.63 | 4.02 |
| Yield (Kg/g Titanium) | 1600 | 1500 | 2100 | 2100 | 1900 | 1400 | 1000 | 1000 |
| Polyethylenic crystallinity (%) | ABSENT | 3 | 4 | 5 | 3 | 2 | 2 | 2 |
| Polypropylenic crystallinity (%) | ABSENT | ABSENT | ABSENT | ABSENT | ABSENT | ABSENT | ABSENT | ABSENT |
| Breaking load ($Kg/cm^2$) | 5.4 | 17.8 | 21.5 | 17.8 | 18.8 | 11 | 17.8 | 19.5 |
| Elongation at break (%) | >1500 | 1010 | 965 | 970 | 1140 | 1075 | 1240 | 1160 |

| | EXAMPLES | | | | | | | |
|---|---|---|---|---|---|---|---|---|
| | 1 | 2 | 3 | 4 | 5 | 6 | 7 | 8 |
| VULCANIZATION MIX | | | | | | | | |
| Copolymer (g) | 100 | 100 | 100 | 100 | 100 | 100 | 100 | 100 |
| Carbon black HAF (g) | 100 | 100 | 100 | 100 | 100 | 100 | 100 | 100 |
| ZnO (g) | 5 | 5 | 5 | 5 | 5 | 5 | 5 | 5 |
| Dicumyl peroxide DC 40 (g) | 6.5 | 5.5 | 6.5 | 6.5 | 6.5 | 6.5 | 6.5 | 6.5 |
| Vulcanization temperature (°C) | 165 | 165 | 165 | 165 | 165 | 165 | 165 | 165 |
| Duration of vulcanization (minutes) | 30 | 30 | 30 | 30 | 30 | 30 | 30 | 30 |
| CHARACTERISTICS OF THE VULCANIZED PRODUCT | | | | | | | | |
| Breaking load ($Kg/cm^2$) | 165 | 177 | 175 | 151 | 164 | 177 | 179 | 150 |
| Elongation at break (%) | 470 | 375 | 380 | 335 | 385 | 410 | 375 | 325 |
| Tension set 100% (%) | 5 | 9 | 10 | 12 | 11 | 8 | 5 | 6 |
| Tension set 200% (%) | 11 | 22 | 24 | 30 | 26 | 16 | 11 | 14 |
| SHORE A hardness | 64 | 73 | 74 | 77 | 75 | 68 | 60 | 72 |

CLAIMS :

1. A process for the preparation of elastomeric copolymers of ethylene with propylene, comprising polymerizing an ethylene/propylene mixture with a catalyst, characterized in that the catalyst is obtained by the reaction of :

(a) a metalorganic aluminium compound selected from one or more Al-trialkyls and Al-alkyl monohalides, and

(b) a titanium halide, supported on an anhydrous magnesium dichloride or magnesium dibromide in activated form, wherein the X-ray spectrum of the magnesium dichloride or dibromide is characterized in that the line of maximum intensity appearing in the spectrum of the normal type Mg-dihalide, as defined in ASTM 3-0854 and ASTM 15-836, is not present and that in its place there is a halo with its maximum intensity displaced with respect to the said line.

2. A process as claimed in Claim 1, characterized in that the titanium halide is a titanium tetrahalide.

3. A process as claimed in Claim 1 or 2, characterized in that the weight ratio of the said catalyst component (a) to the said catalyst component (b) is 200:1 to 3000:1.

4. A process as claimed in any of Claims 1 to 3, characterized in that the polymerization temperature is from 0° to 50°C.

5. An ethylene/propylene copolymer, characterized by being obtained by the process as claimed in any of Claims 1 to 4.

6. An ethylene/propylene copolymer as claimed in Claim 5, characterized by containing from 40% to 60% by weight of ethylene.

European Patent Office

0060090
Application number
EP 82 30 1095

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A-2 111 137 (MONTECATINI-EDISON) *Claims 1,3; examples 4,21* & GB - A - 1 367 775<br>--- | 1-6 | C 08 F 210/16<br>C 08 F 4/64<br>C 08 F 4/02 |
| X,D | US-A-4 013 823 (P.LONGI et al.) *Columns 5,6; comparative example 1*<br>----- | 1-6 | |

| TECHNICAL FIELDS SEARCHED (Int Cl 3) |
|---|
| C 08 F 210/16<br>C 08 F 4/64<br>C 08 F 4/02 |

The present search report has been drawn up for all claims

| Place of search | Date of completion of the search | Examiner |
|---|---|---|
| THE HAGUE | 25-06-1982 | WEBER H. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503 03.82